**Europäisches Patentamt**

**European Patent Office**

**Office européen des brevets**

(19)

(11) Veröffentlichungsnummer: **0 053 732**
**B1**

(12)

# EUROPÄISCHE PATENTSCHRIFT

(45) Veröffentlichungstag der Patentschrift:
29.05.85

(21) Anmeldenummer: 81109500.9

(22) Anmeldetag: 04.11.81

(51) Int. Cl.⁴: **H 01 M 2/12, H 01 M 10/52**

(54) **Verschlussanordnung für Bleiakkumulatoren.**

(30) Priorität: 03.12.80 DE 3045480

(43) Veröffentlichungstag der Anmeldung:
16.06.82 Patentblatt 82/24

(45) Bekanntmachung des Hinweises auf die Patenterteilung:
29.05.85 Patentblatt 85/22

(84) Benannte Vertragsstaaten:
AT BE FR GB IT NL SE

(56) Entgegenhaltungen:
DE - A - 2 445 694
DE - A - 2 621 413
DE - B - 2 340 945
GB - A - 2 016 798

(73) Patentinhaber: **VARTA Batterie Aktiengesellschaft, Am Leineufer 51, D-3000 Hannover 21 (DE)**

(72) Erfinder: **Ledjeff, Konstantin, Dr., Pommernstrasse 82, D-6231 Schwalbach (DE)**

(74) Vertreter: **Kaiser, Dieter Ralf, Dipl.-Ing., Gundelhardtstrasse 72, D-6233 Kelkheim/Ts. (DE)**

**Beschreibung**

Die Erfindung betrifft eine Verschlußanordnung für Bleiakkumulatoren, die zur Entgiftung der beim Betrieb des Akkumulators entstehenden Gase ein Aktivkohlefilter mit eingearbeitetem Docht enthält.

Da die Elektrodengitter in Bleiakkumulatoren gewöhnlich aus antimon- und arsenhaltigen Bleilegierungen hergestellt sind, ist die Entstehung gewisser Mengen an gasförmigem Antimonwasserstoff und Arsenwasserstoff unter den Bedingungen des Betriebes unvermeidbar. Diese Giftstoffe gelangen zusammen mit den Akkumulatorengasen Wasserstoff und Sauerstoff ins Freie und stellen für die unmittelbare Umgebung neben dem explosionsgefährdeten Knallgas wegen ihrer physiologischen Bedenklichkeit eine zusätzliche Belastung dar.

Die toxische Wirkung von $SbH_3$ und $AsH_3$ insbesondere auf die Atmungsorgane kommt darin zum Ausdruck, daß die maximal zulässige Konzentration am Arbeitsplatz (MAK-Werte) sehr niedrig angesetzt ist. Sie beträgt für $SbH_3$ 0,05 ppm (0,2 mg/m$^3$) und für $AsH_3$ 0,1 ppm (0,5 mg/m$^3$).

Berücksichtigt man das Ergebnis einer Analyse, wonach in 100 l Gas aus einer Akkumulatorenzelle mit einem Sb-Anteil von 1,6% an der Gitterlegierung 4 mg $SbH_3$ gefunden wurden, so wäre mindestens die hundertfache Menge an Umgebungsluft notwendig, um dieses Akkumulatorengas bis unter die Schädlichkeitsgrenze zu verdünnen.

In U-Booten beträgt die Gasung während der Entladung im Mittel ca. 1500 l/h. Dort, aber auch in anderen geschlossenen Batterieräumen ist die Gefahr des Überschreitens der MAK-Werte wegen des begrenzten Luft-Volumens durchaus gegeben.

Die Möglichkeit, $SbH_3$ und $AsH_3$ mit Hilfe verschiedener Kontaktstoffe wie CuO oder $PbO_2$ katalytisch zu zersetzen und damit unschädlich zu machen, ist nicht nur bekannt, sondern wurde gemäß DE-PS 2 340 945 auch in der Batteriepraxis bereits realisiert, wobei man fand, daß auch Aktivkohle zur Beseitigung der giftigen Wasserstoffverbindungen geeignet ist. Zugleich hat man in das Aktivkohlebett einen Docht zur Abführung des Rekombinationswassers eingeführt.

Ein in die Entgasungsöffnung eingesetzter Filterstopfen, der zum Abfangen von $SbH_3$ und $AsH_3$ Aktivkohle enthält, ist naturgemäß auch ungewünschten Einwirkungen, die sich beim Batteriebetrieb ergeben könnten, ausgesetzt. So können beispielsweise Öffnungsfunken, die sich bei Masseausfall am Gitter bilden, zum Auslöser von Verpuffungen oder ernsthafterer Gasexplosionen werden, welche das Filter zerstören. Oder die Aktivkohle verliert mit der Zeit durch Wasserbenetzung ihre Aktivität. Selbst eine vorhandene Hydrophobierung hält den austretenden Säurenebeln auf die Dauer nicht stand.

Der Explosionsgefahr hat man bei einem aus der GB-A-2 016 798 bekannten, entlüfteten Füllzapfen für Akkumulatorenzellen bereits dadurch vorzubeugen gesucht, daß man in den Gasweg Flüssigkeitsfallen eingebaut hat, welche die Zellengase vor ihrem Austritt in die äußere Atmosphäre zwangsläufig passieren müssen und die als Flammensperre wirken.

Der Erfindung liegt daher die Aufgabe zugrunde, den Betrieb eines mit einem Aktivkohlefilter sowie anhängendem und eingearbeitetem Docht ausgerüsteten Akkumulators funktionssicherer und langlebiger zu machen.

Die Aufgabe wird erfindungsgemäß dadurch gelöst, daß dem Aktivkohlefilter eine im Gasweg angeordnete Flüssigkeitsvorlage als Zünddurchschlagssperre vorgeschaltet ist.

In einer vorzugsweisen Ausführungsform der Erfindung ist die Zünddurchschlagssperre zugleich mit einem Säureabscheider kombiniert.

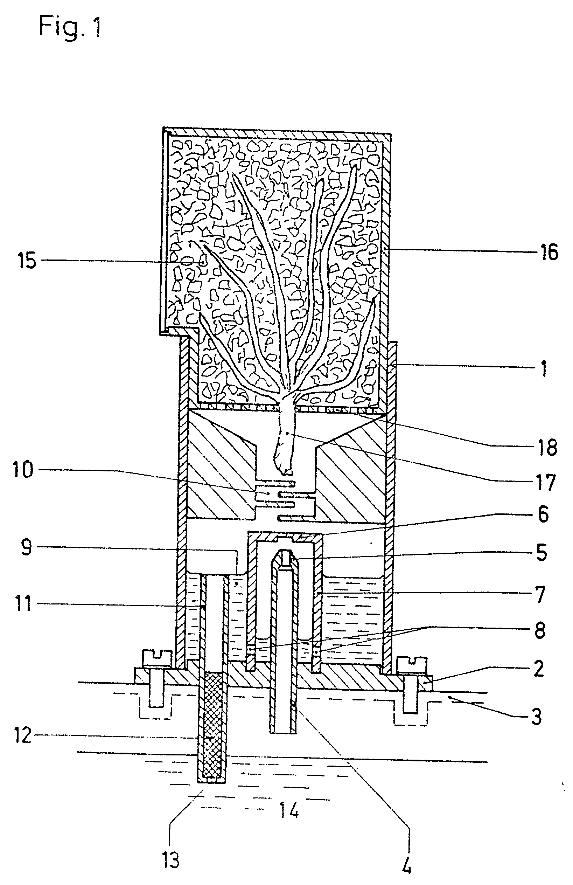

Fig. 1 zeigt eine besonders vorteilhafte Konstruktion für die Verschlußanordnung gemäß der Erfindung.

Diese ist von einem Gehäuse 1 umschlossen, das mit einer Bodenplatte 2 auf dem Batteriedeckel 3 montiert ist. Durch die Bodenplatte 2 führt ein Gaseinlaßrohr 4, dessen oberes Ende zu einer Düse 5 ausgeformt ist und unmittelbar vor dem Boden eines das Gaseinlaßrohr 4 umhüllenden Rohrstücks 7 mündet. Durch diese Anordnung werden die Akkumulatorengase zu einem Umweg gezwungen, wobei die trägheitsbehafteten, von den Gasen mitgeführten Säuretröpfchen der Umlenkung nicht folgen, sondern vielmehr an dem als Prallfläche wirkenden Boden 6 abgeschieden werden. Dieses Prinzip der Säureabscheidung ist an sich aus der DE-OS 2 621 413 bekannt.

Beim Verlassen des Rohrstücks 7 durch die Öffnungen 8 passieren die Gase eine Zünddurchschlagssperre in Gestalt einer Flüssigkeitsvorlage 9, in welcher sie als Blasen aufperlen. Anschließend ziehen die Gase durch das Gaslabyrinth 10 nach oben ab.

Die Flüssigkeitsvorlage 9 stellt einen nach beiden Richtungen wirkenden Flammschutz dar. Das Niveau der Flüssigkeit ist dabei durch das Überlaufrohr 11 so eingestellt, daß es stets tiefer liegt als die Düsenöffnung des Gaseinlaßrohres 4. Ein poröser Füllkörper 12 im Überlaufrohr 11, der durch die Öffnung 13 an dessen unteren Ende mit der Akkumulatorensäure 14 in Verbindung steht, sorgt ferner dafür, daß der hydrostatische Druck des Flüssigkeitsrücklaufs stets größer ist als der Druck im Gaseinlaßrohr 4.

Die Entgiftung der Gase erfolgt vor dem endgültigen Austritt aus der Verschlußanordnung durch das Aktivkohlefilter. Dieses wird von einer Aktivkohlegranulat-Schüttung 15 gebildet, die zweckmäßig, beispielsweise mit einer Polytetrafluoräthylendispersion, hydrophobiert ist. Die Schüttung kann zweckmäßig in einem eigenen Gehäuse 16 untergebracht sein, welches auf das Gehäuse 1 aufgesteckt ist. Die Schüttung steht in innigem Kontakt mit dem zerfaserten Ende eines Dochts 17, beispielsweise aus Polyester, der durch den gelochten Boden 18 des Filtergehäuses 16 abwärts geführt ist.

Der Vorteil des Dochts liegt bei der erfindungsgemäßen Zuordnung von Aktivkohlefilter und Zünddurchschlagsperre darin, daß die Flüssigkeitsvorlage stets mit Wasser versorgt bleibt, welches der Docht dem Aktivkohlegranulat entzieht. In dem Granulat sammelt sich nämlich Wasser infolge Wasserdampfkondensation, hervorgerufen dadurch, daß insbesondere beim Laden die Temperatur der Zelle höher ist als die der Umgebung und der Wasserdampfgehalt der Gase größer ist als es dem Gleichgewichtspartialdruck bei der Umgebungstemperatur entspricht.

Indem erfindungsgemäß dem Aktivkohlefilter eine Flüssigkeitsvorlage als Zünddurchschlagsperre vorgeschaltet ist, wird diese zugleich als Auffangbecken für das im Filter entstehende Wasser genutzt, wobei der Docht dessen Menge niedrig hält und damit dem Granulat für längere Zeit seine Filterwirkung bewahrt.

## Patentansprüche

1. Verschlußanordnung für Bleiakkumulatoren, die zur Entgiftung der beim Betrieb des Akkumulators entstehenden Gase ein Aktivkohlefilter mit eingearbeitetem hängendem Docht enthält, dadurch gekennzeichnet, daß dem Aktivkohlefilter eine im Gasweg angeordnete Flüssigkeitsvorlage (9) als Zünddurchschlagssperre vorgeschaltet ist.

2. Verschlußanordnung nach Anspruch 1, dadurch gekennzeichnet, daß die Flüssigkeitsvorlage mit einem Säureabscheider (5, 6) kombiniert ist.

3. Verschlußanordnung nach Anspruch 1 oder 2, dadurch gekennzeichnet, daß das Aktivkohlefilter aus einer Aktivkohlegranulatschüttung (15) besteht.

4. Verschlußanordnung nach Anspruch 3, dadurch gekennzeichnet, daß das Aktivkohlegranulat hydrophobiert ist.

## Claims

1. Closure arrangement for lead batteries which contains an activated charcoal filter with an incorporated suspended wick for decontamination of the gases produced during operation of the battery, characterised in that a liquid receiver (9) serving to prevent an ignition blow-out is arranged in the gas path in front of the activated charcoal filter.

2. Closure arrangement according to claim 1, characterised in that the liquid receiver is combined with an acid separator (5, 6).

3. Closure arrangement according to claim 1 or 2, characterised in that the activated charcoal filter consists of an activated charcoal granulate filling (15).

4. Closure arrangement according to claim 3, characterised in that the activated charcoal granulate is made water repellent.

## Revendications

1. Dispositif de fermeture pour des accumulateurs au plomb, dispositif comportant pour la décontamination des gaz prenant naissance lors du fonctionnement de l'accumulateur, un filtre en charbon actif avec une mèche enfoncée dans ce filtre et suspendue à ce filtre, dispositif caractérisé en ce qu'un barbotteur à liquide (9), disposé sur le trajet des gaz, est monté en amont du filtre à charbon actif pour jouer le rôle de barrage vis à vis d'une décharge d'allumage.

2. Dispositif de fermeture selon la revendication 1, caractérisé en ce que le barbotteur à liquide est combiné avec un séparateur d'acide (5, 6).

3. Dispositif de fermeture selon revendication 1 ou 2, caractérisé en ce que le filtre en charbon actif est constitué de granulés de charbon actif en vrac (15).

4. Dispositif de fermeture selon la revendication 3, caractérisé en ce que les granulés de charbon actif sont hydrofugés.

Fig. 1